# EUROPÄISCHE PATENTSCHRIFT

(11) **EP 1 499 678 B1**
(45) Veröffentlichungstag und Bekanntmachung des Hinweises auf die Patenterteilung: **25.10.2006**
(21) Anmeldenummer: 03717280.6
(22) Anmeldetag: 07.04.2003
(51) Int. Cl.: C08L 69/00, C08L 51/04

(54) **THERMOPLASTISCHE ZUSAMMENSETZUNGEN MIT VERBESSERTER TIEFTEMPERATURZÄHIGKEIT**
THERMOPLASTIC COMPOSITIONS WITH IMPROVED LOW-TEMPERATURE RESISTANCE
COMPOSITIONS THERMOPLASTIQUES PRESENTANT UNE MEILLEURE RESISTANCE AUX BASSES TEMPERATURES

(30) Priorität: 19.04.2002 DE 10217519
(43) Veröffentlichungstag der Anmeldung: 26.01.2005
(73) Patentinhaber: Bayer MaterialScience AG, 51368 Leverkusen (DE)
(72) Erfinder: VATHAUER, Marc, 50858 Köln (DE); WARTH, Holger, 41539 Dormagen (DE)
(86) Internationale Anmeldenummer: PCT/EP2003/003590
(87) Internationale Veröffentlichungsnummer: WO 2003/089517

(56) Entgegenhaltungen:
- EP-A- 1 038 920
- EP-A- 1 191 065
- US-A- 4 550 138
- US-B1- 6 355 767

## Beschreibung

Die Erfindung betrifft mit Wollastonit bestimmter Spezifikation verstärkte Polycarbonat-Formmassen, enthaltend Harze auf AES-Basis und andere Thermoplaste mit verbesserter Zähigkeit im Tieftemperaturbereich, deren Herstellung sowie daraus erhältliche Formteile.

Es ist bekannt, dass AES-Kautschuke und AES Harze enthaltende Blends witterungsbeständig sind, deren mechanische Eigenschaften im Tieftemperaturbereich jedoch unbefriedigend sind. Bei Temperaturen unter 0°C werden diese spröd und weisen unbefriedigende Zähigkeiten auf, dadurch wird ein Einsatz dieser Formmassen bei tieferen Temperaturen behindert. Insbesondere die Kerbschlagzähigkeit von AES-Blends im Tieftemperaturbereich ist insbesondere im Vergleich zu Acrylniftil/Butadien/Styrol (ABS)-Blends schlecht.

In JP-A 50 109 247 werden Polycarbonatblends mit AES, das 0,1 bis 10 Gew.-% Paraffinöl enthält, beschrieben. In der JP-A 58 098 354 werden Polycarbonatblends mit AES und 0,5 bis 20 Gew.-% Weichmachern für Vinylpolymere beschrieben. Es ist nicht bekannt, dass der Einsatz spezieller Additive, die sich gezielt in der Weichphase des Blends konzentrieren, bei Polycarbonat-AES-Blends zu einer deutlichen Verbesserung der Tieftemperatureigenschaften führt. Die hier beschriebenen Zusammensetzungen weisen ein unzureichendes Steifigkeitsniveau bei Raumtemperatur auf.

Mineral-verstärkte Polycarbonat/AES-Formmassen sind ebenfalls bekannt.

In EP-B 0 391 413 werden PC/AES-Zusammensetzungen mit geringem linearen thermischen Ausdehnungsquotienten sowie hoher Zähigkeit und Wärmefbrmbeständigkeit beschrieben, die 4 bis 18 Gew.-% eines anorganischen Füllstoffs enthalten, dessen Partikel ein mittleres Durchmesser/Dicken-Verhältnis von 4 bis 24 besitzen. Hierbei handelt es sich demnach um plättchenförmige Mineralien wie Talk oder Glimmer.

PC/AES-Formmassen mit faserförmigen mineralischen Füllstoffen sind auch bekannt.

In US-A 5,965,655 werden PC/AES-Zusammensetzungen mit Wollastoniten mit mittlerer Faserlänge von 5 bis 25 µm and mittlerem Teilchendurchmesser von 0,1 bis 10 µm beansprucht. Die Formmassen zeichnen sich insbesondere durch verbesserte Oberflächencharakteristik ("Class A surface") und einen geringen thermischen Ausdehnungskoeffizienten aus. Die bevorzugt eingesetzten Wollastonite weisen ein mittleres Aspekt-Verhältnis (d.h. ein Verhältnis aus Faserlänge zu Faserdurchmesser) von bis zu 6 auf. Formmassen mit derartigen Wollastoniten besitzen in der Regel eine unzureichende Steifigkeit, d.h. einen zu geringen Zug-/Biegemodul. Des Weiteren zeigen die offenbarten Formmassen ein sprödes Bruchverhalten bei Raumtemperatur.

In WO 98/51737 werden Zusammensetzungen aus 65 bis 85 Gew.-Teilen aromatisches Polycarbonat, 10 bis 50 Gew.-Teilen kautschukmodifiziertes Propfcopolymer und 1 bis 15 Gew.-Teilen eines mineralischen Füllstoffes mit einer größten charakteristischen Ausdehnung von 0,1 bis 30 µm beansprucht. Als solche Füllstoffe werden Talk und Wollastonit offenbart. Derart PC-reiche Formmassen weisen eine unzureichende Tieftemperaturzähigkeit auf.

In EP-A 1 038 920 werden Formmassen beschrieben, die ein spezielles Schmelzepolycarbonat, AES und 15 Gew.-Teile eines Wollastoniten mit einem Partikeldurchmesser von 4 µm und einem Aspektverhältnis L/D = 20 enthalten. Derartige Formmassen weisen eine unzureichende Tieftemperaturzähigkeit auf.

EP-A 1 038 920 offenbart Formmassen auf der Basis von Polycarbonat, einem Pfropfpolymer und einem Füllstoff (vorzugsweise u.a. Wollastonit), der mit einem Kupplungsmittel vorbehandelt sein kann.

Die nicht veröffentlichte deutsche Patentanmeldung 10 152 317.3 beschreibt mit Wollastonit bestimmter Spezifikation verstärkte schlagzähmodifizierte Poycarbonat-Zusammensetzungen. Additive gemäß Komponente D) der vorliegenden Erfindung werden nicht erwähnt.

Die nicht veröffentlichte Patentanmeldung 100 542 743.3 beschreibt Polycarbonat/AES-Blends, die zwar Additive gemäß Komponente D) der vorliegenden Erfindung enthalten, Wollastonite bestimmter Spezifikation werden jedoch nicht erwähnt.

Aufgabe der vorliegenden Erfindung war es, ein witterungsstabiles, schlagzähmodifiziertes Polycarbonat-Blend bereitzustellen, das auch bei tieferen Temperaturen ein kerbschlagzähes Verhalten, einen hohen E-Modul und einen niedrigen thermischen Ausdehnungskoeffizienten aufweist und sich damit gut für insbesondere Karosserieaußenanwendungen eignet.

Es wurde gefunden, dass eine Zusammensetzung enthaltend Polycarbonat, Pfropfpolymer auf Basis von Ethylen-α-Olefinen als Pfropfbasis, ein Additiv insbesondere ausgewählt aus Polyisobutene, Polybutenen, EPDM-Ölen, verzweigten aliphatisch gesättigten und/oder verzweigten ungesättigten Kohlenwasserstoffen und deren Gemischen, das sich dadurch auszeichnet, dass es sich gezielt in der Weichphase der Blends konzentriert, sowie ein Wollastonit mit einem definierten Kohlenstoffgehalt die gewünschten Eigenschaften aufweisen.

Des weiteren wurde gefunden, dass solche Formmassen einen guten E-Modul, eine gute Tieftemperaturkerbschlagzähigkeit, eine hohe Reißdehnung und ein gutes Verarbeitungsverhalten aufweisen.

Es wurde gefunden, dass der Zusatz von speziellen Additiven, wie speziellen Kohlenwasserstoffen, zu AES enthaltenden Zusammensetzungen in Kombination mit speziellen mineralischen Füllstoffen, die Tieftemperaturzähigkeit verbessert.

Gegenstand der Erfindung sind Zusammensetzungen enthaltend
A) Polycarbonat und/oder Polyestercarbonat
B) Pfropfpolymer auf Basis Ethylen-α-Olefin-Kautschuk als Pfropfgrundlage,
C) Wollastonit mit einem Kohlenstoffgehalt bezogen auf den Wollastoniten von größer 0,1 Gew.-%, vorzugsweise 0,2 bis 2 Gew.-%, besonders bevorzugt 0,3 bis 1 Gew.-%, ganz besonders bevorzugt 0,3 bis 0,6 Gew.-%, bestimmt nach Elementaranalyse und
D) mindestens ein Additiv, ausgewählt aus der Gruppe der Polybutene, Polyisobutene, EPDM-Öle mit mittleren Molekulargewichten (Zahlenmittel) von 1000 bis 30000, verzweigten aliphatisch gesättigten und verzweigten aliphatisch ungesättigten Kohlenwasserstoffen.

Bevorzugt sind Zusammensetzungen enthaltend
A) 30 bis 85, vorzugsweise 35 bis 80, besonders bevorzugt 40 bis 70 Gew.-Teile Polycarbonat und/oder Polyestercarbonat,
B) 1 bis 50, vorzugsweise 2 bis 35, besonders bevorzugt 3 bis 30, insbesondere 3 bis 25 Gew.-Teile Pfropfpolymerisat mit Ethylen-α-Olefin-Kautschuk als Pfropfgrundlage,
C) 2 bis 20, vorzugsweise 3 bis 18, besonders bevorzugt 4 bis 15, insbesondere 6 bis 12 Gew.-Teilen, ganz besonders bevorzugt 7 bis 10 Gew.-Teilen Wollastonit mit einem Kohlenstoffgehalt bezogen auf den Wollastoniten von größer als 0,1 Gew.-%, vorzugsweise 0,2 bis 2 Gew.-%, besonders bevorzugt 0,3 bis 1 Gew.-%, ganz besonders bevorzugt 0,3 bis 0,6 Gew.-%, bestimmt nach Elementaranalyse, und
D) 0,1 bis 25, vorzugsweise 1 bis 15, insbesondere 1 bis 10, ganz besonders bevorzugt 1,5 bis 8 Gew.-Teilen mindestens eines Additivs ausgewählt aus der Gruppe der Polybutene, Polyisobutene, EPDM-Öle mit mittleren Molekulargewichten (Zahlenmittel) von 1000 bis 30000, verzweigten aliphatisch gesättigten und verzweigten aliphatisch ungesättigten Kohlenwasserstoffen,
wobei die Summe der Gewichtsteile aller Komponenten 100 ergibt.

Die Zusammensetzung kann weitere Komponenten, beispielsweise Vinyl(co)polymerisate, Polyalkylenterephthalate, Flammschutzmittel und Polymeradditive enthalten.

Diese Bestandteile und weitere in den erfindungsgemäßen Zusammensetzungen einsetzbare Komponenten werden anschließend beispielhaft erläutert.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z.B. DE-A 3 077 934).

Die Herstellung aromatischer Polycarbonate erfolgt z.B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigem, beispielsweise Triphenolen oder Tetraphenolen.

Diphenole zur Herstellung der aromatischen Polycarbonate und/oder aromatischen Polyestercarbonate sind vorzugsweise solche der Formel (I) 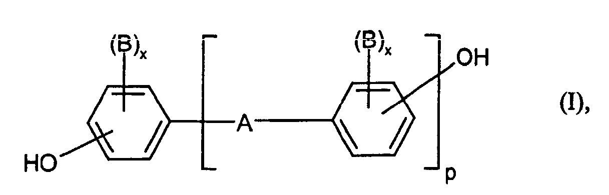 wobei
- A: eine Einfachbindung, C₁ bis C₅-Alkylen, C₂ bis C₅-Alkyliden, C₅ bis C₆-Cycloalkyliden, -O-, -SO-, -CO-, -S-, -SO₂-, C₆ bis C₁₂-Arylen, an das weitere aromatische gegebenenfalls Heteroatome enthaltende Ringe kondensiert sein können,
oder ein Rest der Formel (II) oder (III) 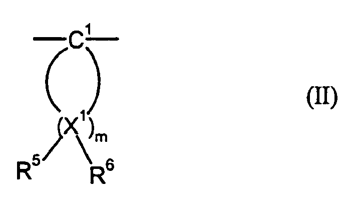 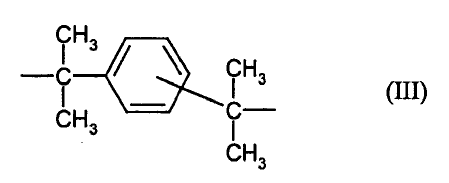
- B: jeweils C₁ bis C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁ bis C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-%, und 10 Mol-%, bezogen auf die Molsumme der jeweils eingesetzten Diphenole.

Die thermoplastischen, aromatischen Polycarbonate haben mittlere Gewichtsmittelmolekulargewichte (M_{w}, gemessen z.B. durch Ultrazentrifuge oder Streulichtmessung) von 10 000 bis 200 000, vorzugsweise 15 000 bis 80 000.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.-%, vorzugsweise 2,5 bis 25 Gew.-%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 Mol-%, bezogen im Falle der phenolischen Kettenabbrecher auf Mol Diphenol und im Falle von Monocarbonsäurechlorid-Kettenabbrecher auf Mol Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol-% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hepten-2,4,4-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methylphenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate liegt im Bereich 1,18 bis 1,4, vorzugsweise 1,20 bis 1,32 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch eingesetzt werden.

### Komponente B

Die erfindungsgemäß eingesetzten Pfropfpolymerisate sind solche mit EP(D)M-Kautschuken als Pfropfgrundlage. Die Glastemperatur solcher Kautschuke kann -40 bis -60°C betragen, sie haben nur eine geringe Anzahl von Doppelbindungen, beispielsweise weniger als 20 je 1000 Kohlenstoffatomen. Beispielhaft seien mindestens ein Ethylen und ein α-Olefin enthaltende Copolymerisate oder Terpolymerisat mit vorzugsweise einer nur geringen Anzahl an Doppelbindungen genannt, insoweit wird verwiesen auf die EP-A 163 411 und 244 857. Bevorzugt sind solche, die durch Polymerisation von mindestens 30 Gew.-Teilen Ethylen, mindestens 30 Gew.-Teilen α-Olefin, vorzugsweise in α-Stellung ungesättigte, aliphatische C₃-C₂₀-, vorzugsweise C₃-C₁₀-Kohlenwasserstoffe, wie beispielsweise und besonders bevorzugt Propylen, 1-Buten, Octen, Hexen, und gegebenenfalls 0,5 bis 15 Gew.-Teilen einer nichtkonjugierten diolefinischen Komponente hergestellt werden, wobei die Summe der Gewichtsteile 100 ergibt. Als Terkomponente werden in der Regel Diolefine mit mindestens fünf Kohlenstoffatomen wie 5-Ethylidennorbornen, Dicyclopentadien, 2,2,1-Dicyclopentadien und 1,4-Hexadien eingesetzt. Geeignet sind ferner Polyalkylenamere wie Polypentamer, Polyoctenamer, Polydodecanamer oder deren Gemische. Schließlich kommen auch teilhydrierte Polybutadienkautschuke in Betracht, bei denen mindestens 70 % Restdoppelbindungen hydriert sind. In der Regel haben EP(D)M-Kautschuke eine Mooney-Viskosität ML₁₋₄ (100°C) von 25 bis 120. Sie sind im Handel erhältlich. Des weiteren können auch analog den unter dem Handelsnamen Engage angebotene Polyolefinelastomere oder Ethen/Octen-Polyolefine Verwendung finden.

Aufgepfropft werden Vinylaromaten und/oder kernsubstituierte Vinylaromaten und Vinylcyanide und/oder (Meth)acrylsäure-(C₁-C₈)-alkylester.

Besonders bevorzugt sind Pfropfpolymerisate von
1) 5 bis 95 Gew.-%, vorzugsweise 20 bis 80 Gew.-%, insbesondere 30 bis 50 Gew.%, wenigstens eines Vinylmonomeren auf
2) 95 bis 5 Gew.-%, vorzugsweise 80 bis 20, insbesondere 70 bis 20 Gew.-% einer oder mehrerer Pfropfgrundlagen auf Basis Ethylen-α-Olefin-Kautschuk mit Glasübergangstemperaturen der Kautschukkomponente < 0°C, vorzugsweise < -20°C, besonders bevorzugt < -40°C, insbesondere auf der Basis von EP(D)M-Kautschuken.

Die Pfropfgrundlage 2) hat im allgemeinen eine mittlere Teilchengröße (d₅₀-Wert) von 0,05 bis 5 µm, vorzugsweise 0,10 bis 2 µm, besonders bevorzugt 0,15 bis 1 µm.

Monomere 1) sind vorzugsweise Gemische aus
1.1) 50 bis 99, vorzugsweise 60 bis 80 Gew.-% Vinylaromaten und/oder kemsubstituierten Vinylaromaten wie Styrol, α-Methylstyrol, p-Methylstyrol, p-Chlorstyrol und/oder (Meth)acrylsäure-(C₁-C₈)-alkylester wie Methylmethacrylat und Ethylmethacrylat und
1.2) 1 bis 50, vorzugsweise 40 bis 20 Gew.-% Vinylcyanide (ungesättigte Nitrile wie Acrylnitril und Methacrylnitril) und/oder (Meth)acrylsäure-(C₁-C₈)-alkylester wie Methylmethacrylat, n-Butylacrylat, t-Butylacrylat, und/oder Derivate, wie Anhydride und Imide ungesättigter Carbonsäuren, beispielsweise Maleinsäureanhydrid und N-Phenylmaleinimid.

Bevorzugte Monomere 1.1 sind ausgewählt aus mindestens einem der Monomere Styrol, α-Methylstyrol und Methylmethacrylat, bevorzugte Monomere 1.2 sind ausgewählt aus mindestens einem der Monomere Acrylnitril, Maleinsäureanhydrid und Methylmethacrylat.

Die Herstellung des Pfropfpolymerisats auf EP(D)M-Basis kann beispielsweise erfolgen, indem eine Lösung des EP(D)M-Elastomeren in dem Monomerengemisch und gegebenenfalls indifferenten Lösungsmitteln hergestellt wird und durch Radikalstarter wie Azoverbindungen oder Peroxiden bei höheren Temperaturen die Pfropfreaktion durchgeführt wird. Beispielhaft seien die Verfahren der DE-AS 23 02 014 und DE-A 25 33 991 genannt. Es ist auch möglich in einer Suspension entsprechend der US-A 4 202 948 oder in Masse zu arbeiten.

### Komponente C

Erfindungsgemäß einsetzbare Wollastonite mit oben angegebenen Kohlenstoffgehalten sind käuflich erhältlich, beispielsweise unter dem Handelsnamen Nyglos^{®} der Firma NYCO Minerals Inc. Willsboro, NY, USA und den Typenbezeichnungen Nyglos^{®} 4-10992 oder Nyglos^{®} 5-10992.

Der Kohlenstoffgehalt wird bestimmt mittels Elementaranalyse.

Bevorzugte Wollastonite haben ein mittleres Aspekt-Verhältnis von >6, insbesondere ≥7 und einen mittleren Faserdurchmesser von 1 bis 15 µm, bevorzugt 2 bis 10 µm, insbesondere von 4 bis 8 µm.

Das mittlere Aspekt-Verhältnis im Sinne der Erfindung ist das Verhältnis der mittleren Länge der Faser zum mittleren Durchmesser.

### Komponente D

Die erfindungsgemäß wirksamen Additive umfassen Polyisobutene, Polybutene, verzweigte aliphatische gesättigte und/oder verzweigte ungesättigte Kohlenwasserstoffe sind solche mit Molekulargewichten von mindestens etwa 400 und Gemische derselben. Die Kohlenwasserstoffe können beispielsweise und bevorzugt mittlere Molekulargewichte (Zahlenmittel) von 300 bis 50.000, besonders bevorzugt 500 bis 30.000, insbesondere 600 bis 10.000, ermittelt durch Gelpermeationschromatographie (GPC), aufweisen. Besonders wirksame Öle haben eine verzweigte Struktur, wobei kurzkettig verzweigte Kohlenwasserstoff-Öle ganz besonders wirksam sind. Besonders geeignet sind Polybutene oder Polyisobutene, insbesondere dann, wenn sie sich durch einen hohen Gehalt, vorzugsweise >50 %, insbesondere >60 % bezogen auf die Endgruppen, an Vinylidenendgruppen auszeichnen.

Erfindungsgemäß geeignet sind ferner niedermolekulare EPDM-Öle. Niedermolekulare EPDM-Öle sind insbesondere solche mit mittleren Molekulargewichten (Zahlenmittel) von 1.000 bis 30.000, vorzugsweise 5.000 bis 10.000 und deren Gemische. Besonders bevorzugt sind EPDM-Öle mit Molekulargewichten von etwa 5.600 bis 8.800.

Die erfindungsgemäß einzusetzenden Additive können in Mengen von 0,1 bis etwa 25 Gew.-%, beispielsweise etwa 1 bis 10 Gew.-%, bezogen auf die Masse der Blends eingesetzt werden.

### Komponente E

Als weitere Komponenten können in der Zusammensetzung enthalten sein: ein oder mehrere thermoplastische Vinyl(Co)Polymerisate E.1 und/oder Polyalkylenterephthalate E.2.

Geeignet sind als Vinyl(Co)Polymerisate E.1 Polymerisate von mindestens einem Monomeren aus der Gruppe der Vinylaromaten, Vinylcyanide (ungesättigte Nitrile), (Meth)Acrylsäure-(C₁ bis C₈)-Alkylester, ungesättigte Carbonsäuren sowie Derivate (wie Anhydride und Imide) ungesättigter Carbonsäuren. Insbesondere geeignet sind (Co)Polymerisate aus
- E.1.1: 50 bis 99, vorzugsweise 60 bis 80 Gew.-% Vinylaromaten und/oder kernsubstituierten Vinylaromaten wie beispielsweise Styrol, α-Methylstyrol, p-Methylstyrol, p-Chlorstyrol) und/oder Methacrylsäure-(C₁-C₈)-Alkylester wie Methylmethacrylat, Ethylmethacrylat), und
- E.1.2: 1 bis 50, vorzugsweise 20 bis 40 Gew.-% Vinylcyanide (ungesättigte Nitrile) wie Acrylnitril und Methacrylnitril und/oder (Meth)Acrylsäure-(C₁-C₈)-Alkylester (wie Methylmethacrylat, n-Butylacrylat, tert.-Butylacrylat) und/oder ungesättigte Carbonsäuren (wie Maleinsäure) und/oder Derivate (wie Anhydride und Imide) ungesättigter Carbonsäuren (beispielsweise Maleinsäureanhydrid und N-Phenyl-Maleinimid).

Die (Co)Polymerisate E. 1 sind harzartig, thermoplastisch und kautschukfrei.

Besonders bevorzugt ist das Copolymerisat aus E.1.1 Styrol und E.1.2 Acrylnitril.

Die (Co)Polymerisate gemäß E.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte M_{w} (Gewichtsmittel, ermittelt durch Lichtstreuung oder Sedimentation) zwischen 15 000 und 200 000.

Die Polyalkylenterephthalate der Komponente E.2 sind Reaktionsprodukte aus aromatischen Dicarbonsäuren oder ihren reaktionsfähigen Derivaten, wie Dimethylestem oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Mol-%, bezogen auf die Diolkomponente Ethylenglykol- und/oder Butandiol-1,4-Reste.

Die bevorzugten Polyalkylenterephthalate können neben Terephthalsäureresten bis zu 20 Mol-%, vorzugsweise bis zu 10 Mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bemsteinsäure, Adipinsäure, Sebacinsäure, Azelainsäure, Cyclohexandiessigsäure.

Die bevorzugten Polyalkylenterephthalate können neben Ethylenglykol- oder Butandiol-1,4-Resten bis zu 20 Mol-%, vorzugsweise bis zu 10 Mol-%, andere aliphatische Diole mit 3 bis 12 C-Atomen oder cycloaliphatische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-β-hydroxyethoxy-phenyl)-propan und 2,2-Bis-(4-hydroxypropoxyphenyl)-propan (DE-A 2 407 674, 2 407 776, 2 715 932).

Die Polyalkylenterephthalate können durch Einbau relativ kleiner Mengen drei- oder vierwertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (z.B. Kunststoff-Handbuch, Band VIII, S. 695 ff., Carl-Hanser-Verlag, München 1973).

Die Komponente E kann in den erfindungsgemäßen Zusammensetzungen in einer Menge von vorzugsweise 0 bis 50 Gew.-Teilen, besonders bevorzugt bis 30 Gew.-Teilen und in am meisten bevorzugter Weise bis zu 20 Gew.-Teilen, wobei die Summe aller Komponenten in der Zusammensetzung 100 ergibt, enthalten sein.

### Komponente F

Die Zusammensetzungen können durch Zusatz geeigneter Additive flammwidrig ausgerüstet sein. Beispielhaft seien als Flammschutzmittel Halogenverbindungen, insbesondere auf Basis von Chlor und Brom, Phosphor enthaltende Verbindungen sowie Silizium-Verbindungen, insbesondere Silikonverbindungen genannt.

Bevorzugt enthalten die Zusammensetzungen phosphorhaltige Flammschutzmittel aus den Gruppen der monomeren und oligomeren Phosphor- und Phosphonsäureester, Phosphonatamine und Phosphazene, wobei auch Mischungen von mehreren Komponenten ausgewählt aus einer oder verschiedenen dieser Gruppen als Flammschutzmittel zum Einsatz kommen können. Auch andere hier nicht speziell erwähnte Phosphorverbindungen können alleine oder in beliebiger Kombination mit anderen Flammschutzmitteln eingesetzt werden.

Bevorzugte Mono- und oligomere Phosphor- bzw, Phosphonsäureester sind Phosphorverbindungen der allgemeinen Formel (IV) 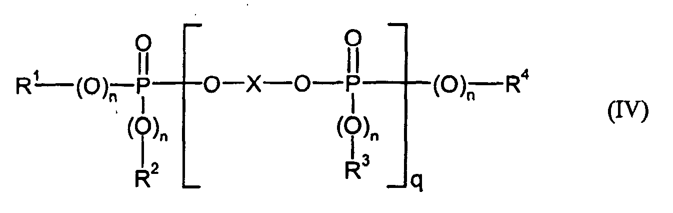 worin
- R¹, R², R³ und R⁴,: unabhängig voneinander jeweils gegebenenfalls halogeniertes C₁ bis C₈-Alkyl, jeweils gegebenenfalls durch Alkyl, vorzugsweise C₁ bis C₄-Alkyl, und/oder Halogen, vorzugsweise Chlor, Brom, substituiertes C₅ bis C₆₋Cycloalkyl, C₆ bis C₂₀-Aryl oder C₇ bis C₁₂-Aralkyl,
- n: unabhängig voneinander, 0 oder 1
- q: 0 bis 30 und
- X: einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

Bevorzugt stehen R¹, R², R³ und R⁴ unabhängig voneinander für C₁ bis C₄ Alkyl, Phenyl, Naphthyl oder Phenyl-C₁-C₄-alkyl. Die aromatischen Gruppen R¹, R², R³ und R⁴ können ihrerseits mit Halogen- und/oder Alkylgruppen, vorzugsweise Chlor, Brom und/oder C₁ bis C₄-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.
- X: in der Formel (IV) bedeutet bevorzugt einen ein- oder mehrkernigen aromatischen Rest mit 6 bis 30 C-Atomen. Dieser leitet sich bevorzugt von Diphenolen der Formel (I) ab.
- n: in der Formel (IV) kann, unabhängig voneinander, 0 oder 1 sein, vorzugsweise ist n gleich 1.
- q: steht für Werte von 0 bis 30. Bei Einsatz von Mischungen verschiedener Komponenten der Formel (IV) können Mischungen vorzugsweise mit zahlengemittelten q-Werten von 0,3 bis 20, besonders bevorzugt 0,5 bis 10, insbesondere 0,5 bis 6, ganz besonders bevorzugt 0,6 bis 2, verwendet werden.
- X: steht besonders bevorzugt für 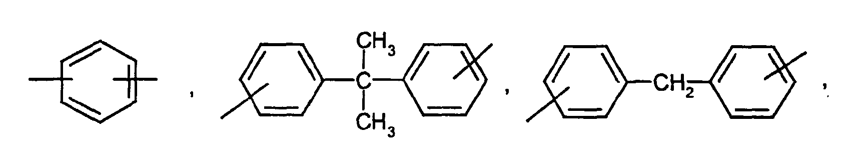 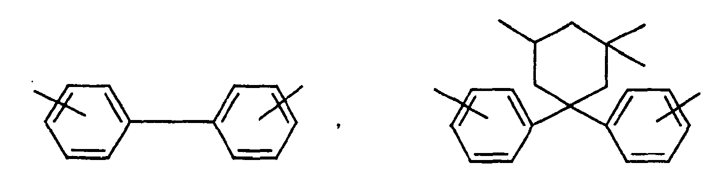 oder deren chlorierte oder bromierte Derivate, insbesondere leitet sich X von Resorcin, Hydrochinon, Bisphenol A oder Diphenylphenol ab. Besonders bevorzugt leitet sich X von Bisphenol A ab.

Als erfindungsgemäße Komponente F können Monophosphate (q=O), Oligophosphate (q=1-30) oder Mischungen aus Mono- und Oligophosphaten eingesetzt werden.

Monophosphorverbindungen der Formel (IV) sind insbesondere Tributylphosphat, Tris-(2-chlorethyl)-phosphat, Tris-(2,3-dibrompropyl)-phosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphensäurediphenylester, Phenylphosphonsäurediethylester, Triphenylphosphinoxid oder Trikresylphosphinoxid.

Die Phosphorverbindungen gemäß Komponente F sind bekannt (vgl. z.B. EP-A 0 363 608, EP-A 0 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Die mittleren q-Werte können bestimmt werden, indem mittels geeigneter Methode (Gaschromatographie (GC), High Pressure Liquid Chromatography (HPLC), Gelpermeationschromatographie (GPC)) die Zusammensetzung der Phosphat-Mischung (Molekulargewichtsverteilung) bestimmt wird und daraus die Mittelwerte für q berechnet werden.

Weiterhin können Phosphonatamine und Phosphazene als Flammschutzmittel eingesetzt werden.

Die Flammschutzmittel können allein oder in beliebiger Mischung untereinander oder in Mischung mit anderen Flammschutzmitteln eingesetzt werden.

Die Komponente F kann in der erfindungsgemäßen Zusammensetzung in einer Menge von vorzugsweise 1 bis 40 Gew.-Teilen, besonders bevorzugt 2 bis 30 Gew.-Teilen und in am meisten bevorzugter Weise 2 bis 20 Gew.-Teilen enthalten sein, wobei die Summe der Gewichtsteile aller Komponenten in der Zusammensetzung 100 ergibt.

### Komponente G

Die Flammschutzmittel entsprechend Komponente F werden oft in Kombination mit sogenannten Antidrippingmitteln verwendet, welche die Neigung des Materials zum brennenden Abtropfen im Brandfall verringern. Beispielhaft seien hier Verbindungen der Substanzklassen der fluorierten Polyolefine, der Silikone sowie Aramidfasem genannt. Diese können auch in den erfindungsgemäßen Zusammensetzungen zum Einsatz kommen. Bevorzugt werden fluorierte Polyolefine als Antidrippingmittel eingesetzt.

Fluorierte Polyolefine sind bekannt und beispielsweise in der EP-A 0 640 655 beschrieben. Sie werden zum Beispiel unter der Marke Teflon^{®} 30N von DuPont vertrieben.

Die fluorierten Polyolefine können sowohl in reiner Form als auch in Form einer koagulierten Mischung von Emulsionen der fluorierten Polyolefine mit Emulsionen der Pfropfpolymerisate (Komponente B) oder mit einer Emulsion eines Copolymerisats, vorzugsweise auf Styrol/Acrylnitril-Basis eingesetzt werden, wobei das fluorierte Polyolefin als Emulsion mit einer Emulsion des Pfropfpolymerisats oder des Copolymerisats gemischt und anschließend koaguliert wird.

Weiterhin können die fluorierten Polyolefine als Präcompound mit dem Pfropfpolymerisat (Komponente B) oder einem Copolymerisat gemäß E.1, vorzugsweise auf Styrol/Acrylnitril-Basis, eingesetzt werden. Die fluorierten Polyolefine werden als Pulver mit einem Pulver oder Granulat des Pfropfpolymerisats oder Copolymerisats vermischt und in der Schmelze im allgemeinen bei Temperaturen von 200 bis 330°C in üblichen Aggregaten wie Innenknetern, Extrudern oder Doppelwellenschnecken compoundiert.

Die fluorierten Polyolefine können auch in Form eines Masterbatches eingesetzt werden, der durch Emulsionspolymerisation mindestens eines monoethylenisch ungesättigten Monomers in Gegenwart einer wässrigen Dispersion des fluorierten Polyolefins hergestellt wird. Bevorzugte Monomerkomponenten sind Styrol, Acrylnitril und deren Gemische. Das Polymerisat wird nach saurer Fällung und nachfolgender Trocknung als rieselfähiges Pulver eingesetzt.

Die Koagulate, Präcompounds oder Masterbatches besitzen üblicherweise Feststoffgehalte an fluoriertem Polyolefin von 5 bis 95 Gew.-%, vorzugsweise 7 bis 60 Gew.-%.

Die Komponente G kann in der erfindungsgemäßen Zusammensetzung in einer Menge von vorzugsweise 0,05 bis 10 Gew.-Teilen, besonders bevorzugt 0,1 bis 5 Gew.-Teilen und in am meisten bevorzugter Weise 0,3 bis 5 Gew.-Teilen enthalten sein, wobei der Gehalt an fluoriertem Polyolefin an sich in der Zusammensetzung vorzugsweise 0,05 bis 1, insbesondere 0,1 bis 0,5 Gew.-Teile beträgt, wobei die Summe der Gewichtssteile aller Komponenten in der Zusammensetzung 100 ergibt.

### Komponente H (Weitere Zusätze)

Die erfindungsgemäßen Zusammensetzungen können weiterhin wenigstens eines der üblichen Additive, wie Gleit- und Entformungsmittel, beispielsweise Pentaerythrittetra-stearat, Nukleiermittel, Antistatika, Stabilisatoren, und weitere Füll- und Verstärkungsstoffe sowie Farbstoffe und Pigmente enthalten.

Alle Gewichtsteil-Angaben in dieser Anmeldung sind so normiert, dass die Summe der Gewichtsteile der Komponenten A) bis H) in der Zusammensetzung 100 ergibt.

Die erfindungsgemäßen Zusammensetzungen werden hergestellt, indem man die jeweiligen Bestandteile in bekannter Weise vermischt und bei Temperaturen von 200°C bis 300°C in üblichen Aggregaten wie Innenknetem, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die erfindungsgemäßen Formmassen können zur Herstellung von Formteilen jeder Art verwendet werden. Diese können durch Spritzguss, Extrusion und Blasformverfahren hergestellt werden. Eine weitere Form der Verarbeitung ist die Herstellung von Formteilen durch Tiefziehen aus zuvor hergestellten Platten oder Folien und das Verfahren der Folienhinterspritzung (IMD).

Beispiele für solche Formteile sind Folien, Profile, Gehäuseteile jeder Art, z.B. für Haushaltsgeräte wie Saftpressen, Kaffeemaschinen, Mixer; für Büromaschinen wie Monitore, Drucker, Kopierer; Automobilaußen- und -innenteilen; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen.

Insbesondere können die erfindungsgemäßen Formmassen beispielsweise auch zur Herstellung von folgenden Formteilen verwendet werden:

Innenausbauteile für Schienenfahrzeuge, Schiffe, Flugzeuge, Busse und andere Kraftfahrzeuge, Karosserieaußenteile im Kfz-Bereich, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, Flächige Wandelemente, Gehäuse für Sicherheitseinrichtungen, Wärmeisolierte Transportbehältnisse, Vorrichtung zur Haltung oder Versorgung von Kleintieren, Formteile für Sanitär- und Badausrüstungen, Abdeckgitter für Lüfteröffnungen, Formteile für Garten- und Gerätehäuser, Gehäuse für Gartengeräte.

Gegenstand der vorliegenden Erfindung ist daher auch ein Verfahren zur Herstellung der Zusammensetzung, deren Verwendung zur Herstellung von Formteilen, Platten oder Folien, sowie die Formteile, Platten oder Folien selbst.

Die folgenden Beispiele dienen der weiteren Erläuterung der Erfindung.

### Beispiele

### Komponenten

- A:: Lineares PC auf Basis BPA mit einer relativen Lösungsviskosität von 1,28, gemessen in CH₂Cl₂ als Lösungsmittel bei 25°C und einer Konzentration von 0,5 g/100 ml.
- B:: AES-Blend (Blendex^{®} WX 270 Ube Cycon Ltd., Tokio, Japan).
- C-W1:: Wollastonit mit einem C-Gehalt von 0,49 Gew.-% und einem d₅₀ von 4,8 µm und einem Aspektverhältnis von 8:1 (Nyglos^{®} 4 10992 NYCO Minerals Inc., Willsboro, NY, (USA).
- C-W2:: Wollastonit mit einem C-Gehalt von < 0,1 Gew.-% und einem d₅₀ von 6,5 µm und einem Aspektverhältnis von 8:1 (Nyglos^{®} 4, NYCO Minerals Inc., Willsboro, NY, (USA)
- C-T:: Naintsch A3 (Naintsch Mineralwerke GmbH, Graz, Österreich), Talk mit einem mittleren Teilchendurchmesser (d₅₀) lt. Herstellerangabe von 1,2 µm.
- E:: Styrol/Arylnitril-Copolymerisat mit einem Styrol/Acrylnitril-Gewichtsverhältnis von 72:28 und einer Grenzviskosität von 0,55 dl/g (Messung in DMF bei 20°C).
- D:: Poly R^{®} 10, ein Isobutenöl, M̅ₙ = 1000 g/mol (GPC), (Pitco Industries N.V., Niederlande).
- H:: übliche Polymeradditive, wie z.B. Entformungsmittel und Antioxidantien.

Das Mischen der Komponenten erfolgt auf einem 31-Innenkneter. Die Formkörper werden auf einer Spritzgussmaschine Typ Arburg 270E bei 260°C hergestellt.

Der Kohlenstoffgehalt der Wollastonite wird mittels Elementaranalyse bestimmt. Eine 24-stündige Extraktion des Wollastonits C-W1 mit Chloroform ergab nur folgende Menge an extrahierter Substanz (jeweils bezogen auf die Gesamtmenge an vorgelegtem Wollastonit):
- C-W1:: 0,06 Gew.-%

Dieser Wert belegt, dass es sich bei dem Kohlenstoff um chemisch gebundenen Kohlenstoff handelt, es liegt also kein physikalisches Gemisch aus Mineral und einer kohlenstoffhaltigen Verbindung vor.

Zur Bestimmung der Temperatur des Zäh/Sprödübergangs werden die Kerbschlagzähigkeiten aₖ bei verschiedenen Temperaturen gemessen und beurteilt. Ausgehend von der Raumtemperatur wird die Prüftemperatur dazu in Schritten von 5° solange erniedrigt bis ein Sprödbruch beobachtet wird.

Der E-Modul und die Reißdehnung werden im Zugversuch nach ISO 527 bestimmt.

Der linare thermische Ausdehnungskoeffizient längs/quer (CLTE 1/g) wird bestimmt nach ASTM E831.

**Tabelle 1**

| **Beispiel** | **1** | **Vergleich 1** | **Vergleich 2** | **Vergleich 3** | **Vergleich 4** | **Vergleich 5** |
|---|---|---|---|---|---|---|
| **Komponenten (Gew.-Teile)** | | | | | | |
| A | 50,54 | 52,84 | 50,54 | 52,84 | 50,54 | 52,84 |
| B | 15,69 | 16,39 | 15,69 | 16,39 | 15,69 | 16,39 |
| D | 20,91 | 21,88 | 20,91 | 21,88 | 20,91 | 21,88 |
| C-W1 | 7,35 | 7,69 | | | | |
| C-W2 | | | 7,35 | 7,69 | | |
| C-T | | | | | 7,35 | 7,69 |
| D | 4,31 | | 4,31 | | 4,31 | |
| H | 1,2 | 1,2 | 1,2 | 1,2 | 1,2 | 1,2 |
| | | | | | | |
| E-Modul[MPa] | 2571 | 2770 | 2564 | 2637 | 2652 | 2893 |
| Reißdehnung [%] | 66,4 | 61,4 | 44,1 | 60,2 | 29,0 | 35,1 |
| Zäh-/Spröd [°C] | -10 | -5 | -5 | -5 | -5 | 5 |
| CLTE 1/q* | 83/106 | 77/112 | 85/111 | 80/105 | 81/104 | 82/95 |

| | | | | | | |
|---|---|---|---|---|---|---|
| *: CLTE 1/q = linearer thermischer Ausdehnungskoeffizient längs/quer [ppm/K] | | | | | | |

Wie man an den Versuchen sieht, wird die beste Kerbschlagzähigkeit - ausgedrückt durch den niedrigsten Zäh-/ Sprödübergang- für eine mineralgefüllte Formmasse mit der Kombination des beanspruchten Wollastoniten und der Zugabe des Additives erreicht (Beispiel1) bei gleichzeitig hoher Reißdehnung. Der E-Modul ist im Rahmen der experimentellen Messgenauigkeit (+- 100 MPa) konstant.

## Patentansprüche

1. Zusammensetzung enthaltend
A) Polycarbonat und/oder Polyestercarbonat
B) Pfropfpolymer auf Basis Ethylen-α-Olefin-Kautschuk als Pfropfgrundlage,
C) Wollastonit mit einem Kohlenstoffgehalt bezogen auf den Wollastoniten von größer 0,1 Gew.%, bestimmt nach Elementaranalyse und
D) mindestens ein Additiv, ausgewählt aus der Gruppe der Polybutene, Polyisobutene, EPDM-Öle mit mittleren Molekulargewichten (Zahlenmittel) von 1000 bis 30000, verzweigten aliphatisch gesättigten und verzweigten aliphatisch ungesättigten Kohlenwasserstoffe.

2. Zusammensetzung gemäß Anspruch 1, enthaltend
A) 30 bis 85 Gew.-Teile Polycarbonat und/oder Polyestercarbonat,
B) 1 bis 50 Gew.-Teile Pfropfpolymerisat mit Ethylen-α-Olefin-Kautschuk als Pfropfgrundlage,
C) 2 bis 20 Gew.-Teilen Wollastonit mit einem Kohlenstoffgehalt bezogen auf den Wollastoniten von größer als 0,1 Gew.-%, bestimmt nach Elementaranalyse, und
D) 0,1 bis 25 Gew.-Teilen mindestens eines Additivs ausgewählt aus der Gruppe der Polybutene, Polyisobutene, EPDM-Öle verzweigten aliphatisch gesättigten und verzweigten aliphatisch ungesättigten Kohlenwasserstoffen,
wobei die Summe der Gewichtsteile aller Komponenten 100 ergibt.

3. Zusammensetzung gemäß Anspruch 1, wobei Komponente B) ein Pfropfpolymer aus wenigstens einem Vinylmonomeren und einer oder mehrerer Pfropfgrundlagen auf Basis Ethylen-α-Olefin-Kautschuk mit Glasübergangstemperaturen der Kautschukkomponente <0°C ist..

4. Zusammensetzung gemäß Anspruch 3, wobei Komponente B) ein Pfropfpolymer von
1) 50 bis 99 Gew.-% (bezogen auf 1)) mindestens eines Monomeren ausgewählt aus der Gruppe der Vinylaromaten, kemsubstituierten Vinylaromaten und (Meth)-Acrylsäure-(C₁-C₈)-alkylester (1.1) und 1 bis 50 Gew.-% (bezogen auf 1)) mindestens eines Monomeren, ausgewählt aus der Gruppe der Vinylcyanide, (Meth)-Acrylsäure-(C₁₋C₈)-alkylester und Derivate ungesättigter Carbonsäuren (1.2) auf,
2) eine oder mehrere Pfropfgrundlagen auf Basis Ethylen-α-Olefin-Kautschuk mit Glasübergangstemperaturen <-40°C.

5. Zusammensetzung gemäß Anspruch 4, wobei Monomere 1.1 ausgewählt sind aus mindestens einem der Monomere Styrol, α-Methylstyrol und Methylmethacrylat und Monomere 1.2 ausgewählt sind aus mindestens einem der Monomere Acrylnitril, Maleinsäureanhydrid und Methylmethacrylat.

6. Zusammensetzung gemäß Anspruch 3, wobei die Pfropfgrundlage ausgewählt ist aus EP(D)M-Kautschuken.

7. Zusammensetzung gemäß Anspruch 2, wobei Komponente C) ein Wollastonit mit einem Kohlenstoffgehalt bezogen auf den Wollastoniten von 0,2 bis 2 Gew.-% ist.

8. Zusammensetzung gemäß Anspruch 1, wobei Komponente D) Additive sind, ausgewählt aus mindestens einem aus der Gruppe der Polybutene, Polyisobutene verzweigten aliphatisch gesättigten und verzweigten aliphatisch ungesättigten Kohlenwasserstoffen mit mittleren Molekulargewichten (Zahlenmittel) von 300 bis 50 000 sowie EPDM-Öle mit mittleren Molekulargewichten (zahlenmittel) von 1000 bis 30000.

9. Zusammensetzung gemäß Anspruch 1, enthaltend
35 bis 80 Gew.-Teile A),
2 bis 35 Gew.-Teile B),
3 bis 18 Gew.-Teile C) und
1 bis 15 Gew.-Teile D).

10. Zusammensetzung gemäß Anspruch 1, enthaltend weitere Komponenten ausgewählt aus mindestens einem aus der Gruppe Vinyl(co)polymerisate, Polyalkylenterephthalate, Flammschutzmittel und Polymeradditive.

11. Zusammensetzung gemäß Anspruch 10, enthaltend ein Flammschutzmittel ausgewählt aus Mono- und oligomeren Phosphorverbindungen der Formel (IV) 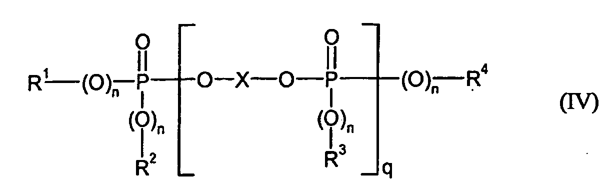 worin
R¹, R², R³ und R⁴, unabhängig voneinander jeweils gegebenenfalls halogeniertes C₁ bis C₈-Alkyl, jeweils gegebenenfalls durch Alkyl und/oder Halogen, substituiertes C₅ bis C₆-Cycloalkyl, C₆ bis C₂₀-Aryl oder C₇ bis C₁₂-Aralkyl,
n unabhängig voneinander, 0 oder 1
q 0 bis 30 und
X einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

12. Zusammensetzung gemäß Anspruch 11, wobei
X in Formel (IV) für 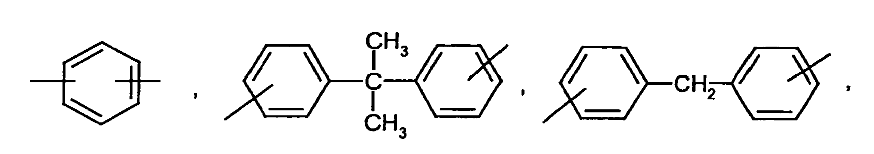 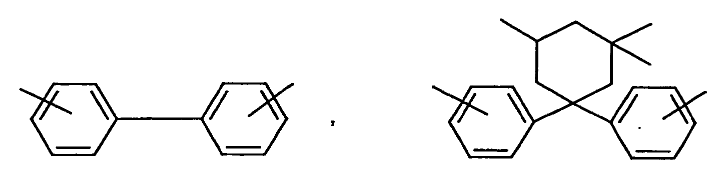
oder deren chlorierte oder bromierte Derivate steht.

13. Zusammensetzung gemäß Anspruch 1, enthaltend mindestens ein Additiv ausgewählt aus der Gruppe der Stabilisatoren, Gleit- und Entformungsmittel, Nukleierungsmittel, Antistatika, Farbstoffe, Pigmente, Antidrippingmittel und Füll- und Verstärkungsstoffe.

14. Verwendung der Zusammensetzung gemäß Anspruch 1 zur Herstellung von Formteilen, Platten und Folien.

15. Formteile, Platten und Folien, erhältlich aus Zusammensetzungen gemäß Anspruch 1.

## Claims

1. Composition comprising
A) polycarbonate and/or polyester carbonate
B) graft polymer based on ethylene-α-olefin rubber as graft base,
C) wollastonite with a carbon content relative to the wollastonites of greater than 0.1 wt.%, determined by elemental analysis, and
D) at least one additive, selected from the group of polybutenes, polyisobutenes, EPDM oils having average molecular weights (number average) of 1000 to 30,000, branched aliphatically saturated and branched aliphatically unsaturated hydrocarbons.

2. Composition according to claim 1, comprising
A) 30 to 85 parts by weight of polycarbonate and/or polyester carbonate,
B) 1 to 50 parts by weight of graft polymer with ethylene-α-olefin rubber as graft base,
C) 2 to 20 parts by weight of wollastonite with a carbon content relative to the wollastonites of greater than 0.1 wt.%, determined by elemental analysis, and
D) 0.1 to 25 parts by weight of at least one additive selected from the group of polybutenes, polyisobutenes, EPDM oils having average molecular weights (number average) of 1000 to 30,000, branched aliphatically saturated and branched aliphatically unsaturated hydrocarbons,
wherein the sum of the parts by weight of all components equals 100.

3. Composition according to claim 1, wherein component B) is a graft polymer consisting of at least one vinyl monomer and one or more graft bases based on ethylene-α-olefin rubber with glass transition temperatures in the rubber component of <0°C.

4. Composition according to claim 3, wherein component B) is a graft polymer of
1) 50 to 99 wt.% (relative to 1)) of at least one monomer selected from the group of vinyl aromatics, ring-substituted vinyl aromatics and (meth)acrylic acid (C₁-C₈) alkyl esters (1.1) and 1 to 50 wt.% (relative to 1)) of at least one monomer selected from the group of vinyl cyanides, (meth)acrylic acid (C₁-C₈) alkyl esters and derivatives of unsaturated carboxylic acids (1.2),
2) one or more graft bases based on ethylene-α-olefin rubber with glass transition temperatures of <-40°C.

5. Composition according to claim 4, wherein monomers 1.1 are selected from at least one of the monomers styrene, α-methyl styrene and methyl methacrylate and monomers 1.2 are selected from at least one of the monomers acrylonitrile, maleic anhydride and methyl methacrylate.

6. Composition according to claim 3, wherein the graft base is selected from EP(D)M rubbers.

7. Composition according to claim 2, wherein component C) is a wollastonite with a carbon content relative to the wollastonites of 0.2 to 2 wt.%.

8. Composition according to claim 1, wherein component D) is additives selected from at least one of the group of polybutenes, polyisobutenes, branched aliphatically saturated and branched aliphatically unsaturated hydrocarbons having average molecular weights (number average) of 300 to 50,000 and EPDM oils having average molecular weights (number average) of 1000 to 30,000.

9. Composition according to claim 1, comprising
35 to 80 parts by weight of A),
2 to 35 parts by weight of B),
3 to 18 parts by weight of C) and
1 to 15 parts by weight of D).

10. Composition according to claim 1, comprising further components selected from at least one of the group of vinyl (co)polymers, polyalkylene terephthalates, flame retardants and polymer additives.

11. Composition according to claim 10, comprising a flame retardant selected from monomeric and oligomeric phosphorus compounds having the formula (IV) 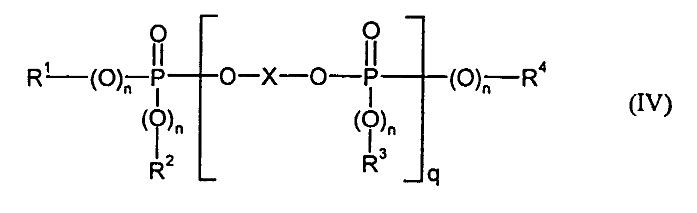 wherein
R¹, R², R³ and R⁴ each mutually independently denote optionally halogenated C₁ to C₈ alkyl, C₅ to C₆ cycloalkyl, C₆ to C₂₀ aryl or C₇ to C₁₂ aralkyl, each optionally substituted by alkyl and/or halogen,
n mutually independently denotes 0 or 1
q denotes 0 to 30 and
X denotes a mononuclear or polynuclear aromatic radical having 6 to 30 C atoms, or a linear or branched aliphatic radical having 2 to 30 C atoms, which can be OH-substituted and can contain up to 8 ether bonds.

12. Composition according to claim 11, wherein
X in formula (IV) stands for 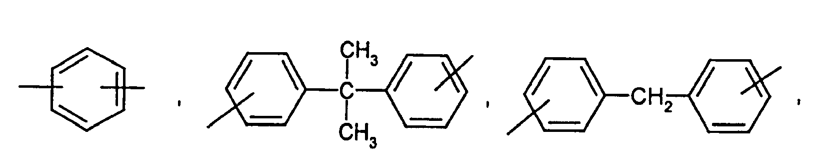 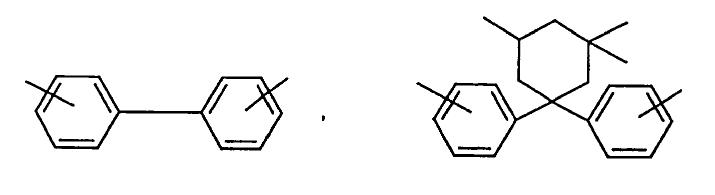
or chlorinated or brominated derivatives thereof.

13. Composition according to claim 1, comprising at least one additive selected from the group of stabilisers, lubricants and release agents, nucleating agents, antistatics, dyes, pigments, anti-dripping agents and fillers and reinforcing agents.

14. Use of the composition according to claim 1 for producing moulded parts, sheets and films.

15. Moulded parts, sheets and films obtainable from compositions according to claim 1.

## Revendications

1. Composition contenant
A) un polycarbonate et/ou un polyestercarbonate,
B) un polymère greffé à base de caoutchouc éthylène-α-oléfine comme base de greffage,
C) de la wollastonite avec une teneur en carbone rapportée à la wollastonite supérieure à 0,1 % en poids, définie par analyse élémentaire et
D) au moins un additif, choisi dans le groupe des polybutènes, des polyisobutènes, des huiles EPDM avec des masses moléculaires moyennes (en nombre) de 1000 à 30 000, des hydrocarbures saturés aliphatiques ramifiés et insaturés aliphatiques ramifiés.

2. Composition selon la revendication 1, contenant
A) 30 à 85 parties en poids de polycarbonate et/ou de polyestercarbonate,
B) 1 à 50 parties en poids de polymère greffé avec un caoutchouc éthylène-α-oléfine comme base de greffage,
C) 2 à 20 parties en poids de wollastonite avec une teneur en carbone rapportée à la wollastonite supérieure à 0,1 % en poids, définie par analyse élémentaire, et
D) 0,1 à 25 parties en poids d'au moins un additif choisi dans le groupe des polybutènes, des polyisobutènes, des huiles EPDM avec des masses moléculaires moyennes (en nombre) de 1000 à 30 000, hydrocarbures saturés aliphatiques ramifiés et insaturés aliphatiques ramifiés,
la somme des parties en poids de tous les composants étant de 100.

3. Composition selon la revendication 1, dans laquelle le composant B) est un polymère greffé d'au moins un monomère vinylique et d'une ou de plusieurs base de greffage à base d'un caoutchouc éthylène-α-oléfine avec des températures de transition vitreuse du composant caoutchouc < 0 °C.

4. Composition selon la revendication 3, dans laquelle le composant B) est un polymère greffé de
1) 50 à 99 % en poids (rapporté a 1)) d'au moins un monomère choisi dans le groupe des vinylaromatiques, des vinylaromatiques substitués sur le noyau et des esters d'alkyle (en C₁-C₈) d'acide (méth)acrylique (1.1) et 1 à 50 % en poids (rapporté à 1)) d'au moins un monomère choisi dans le groupe du vinylcyanure, des esters d'alkyle (en C₁₋C₈) d'acide (méth)acrylique et des dérivés d'acides carboxyliques insaturés (1.2),
2) une ou plusieurs bases de greffage à base de caoutchouc éthylène-α-oléfine avec des températures de transition vitreuse < - 40 °C.

5. Composition selon la revendication 4, dans laquelle les monomères 1.1 sont choisis parmi au moins un des monomères styrène, α-méthylstyrène et méthacrylate de méthyle et les monomères 1.2 sont choisis parmi au moins un des monomères acrylonitrile, anhydride d'acide maléique et méthacrylate de méthyle.

6. Composition selon la revendication 3, dans laquelle la base de greffage est choisie parmi les caoutchoucs EP(D)M.

7. Composition selon la revendication 2, dans laquelle le composant C) est une wollastonite avec une teneur en carbone rapportée à la wollastonite de 0,2 à 2 % en poids.

8. Composition selon la revendication 1, dans laquelle les additifs du composant D) sont choisis parmi au moins un du groupe des polybutènes, des polyisobutènes, des hydrocarbures saturés aliphatiques ramifiés et insaturés aliphatiques ramifiés avec des masses moléculaires moyennes (en nombre) de 300 à 50 000 ainsi que des huiles EPDM avec des masses moléculaires moyennes (en nombre) de 1000 à 30 000.

9. Composition selon la revendication 1, contenant
35 à 80 parties en poids de A),
2 à 35 parties en poids de B),
3 à 18 parties en poids de C) et
1 à 15 parties en poids de D).

10. Composition selon la revendication 1, contenant d'autres composants choisis parmi au moins un du groupe des (co)polymères de vinyle, des poly(téréphtalate d'alkylène), des ignifugeants et des additifs polymères.

11. Composition selon la revendication 10, contenant un ignifugeant choisi parmi des composés phosphorés monomères et oligomères de formule (IV) 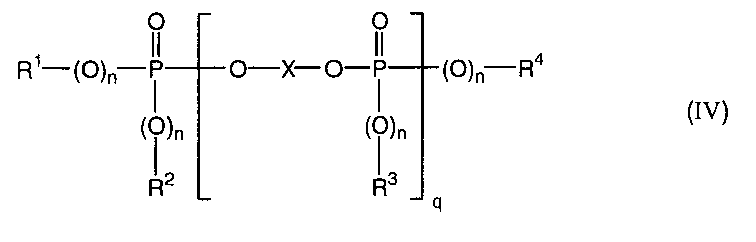 dans laquelle
R¹, R², R³ et R⁴, indépendamment les uns des autres signifient chaque fois un groupe alkyle en C₁ à C₈ éventuellement halogéné, un groupe cycloalkyle en C₅ à C₆, aryle en C₆ à C₂₀ ou aralkyle en C₇ à C₁₂, chaque fois éventuellement substitué par un groupe alkyle et/ou un halogène,
n indépendamment l'un de l'autre, signifie 0 ou 1,
q signifie 0 à 30 et
X signifie un radical aromatique à un ou plusieurs noyaux avec 6 à 30 atomes de C, ou un radical aliphatique linéaire ou ramifié avec 2 à 30 atomes de C, qui peut être substitué par OH et qui peut contenir jusqu'à 8 liaisons éthers.

12. Composition selon la revendication 11, dans laquelle X dans la formule (IV) est 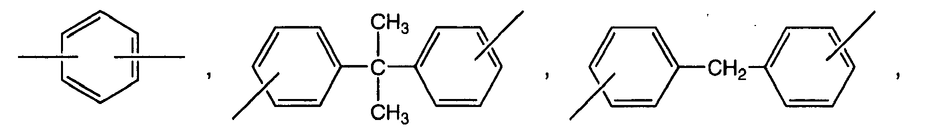 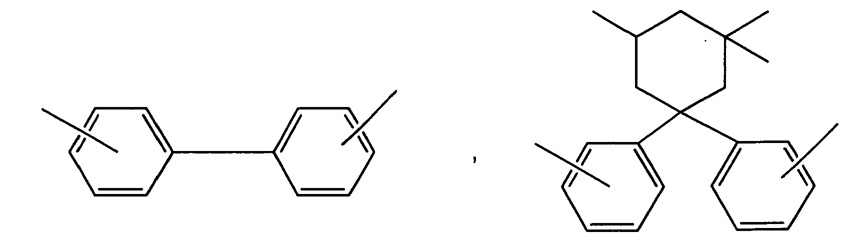 ou leurs dérivés chlorés ou bromés.

13. Composition selon la revendication 1, contenant au moins un additif choisi dans le groupe des stabilisateurs, des lubrifiants et des agents de démoulage, des agents de nucléation, des antistatiques, des colorants, des pigments, des agents anti-égouttage et des charges et des agents renforçants.

14. Utilisation de la composition selon la revendication 1 pour la préparation de produits moulés, de plaques et de feuilles.

15. Produits moulés, plaques et feuilles, susceptibles d'être obtenus à partir des compositions selon la revendication1.
